# EUROPEAN PATENT APPLICATION

(11) **EP 4 614 011 A1**
(43) Date of publication of application: **10.09.2025**
(21) Application number: 24221814.7
(22) Date of filing: 19.12.2024
(51) Int. Cl.: F16B 21/18

(54) **VEHICLE AND CIRCLIP FOR HIGH-SPEED ROTATING SHAFT**

(30) Priority: 04.03.2024 CN 202420413776 U
(71) Applicant: Nio Technology (Anhui) Co., Ltd, Hefei City, Anhui 230601 (CN)
(72) Inventor: SONG, Fangfang, AnTing Town (CN); ZHANG, Tiancheng, AnTing Town (CN); REN, Chuanwei, AnTing Town (CN); LI, Fei, AnTing Town (CN)
(74) Representative: Vossius & Partner Patentanwälte Rechtsanwälte mbB

(57) **Abstract**

The invention relates to the technical field of vehicles, and particularly provides a vehicle and a circlip for a high-speed rotating shaft, to solve the problem of an existing anti-disengagement circlip for a motor shaft being likely to cause wear of tooling. The invention provides a circlip for a high-speed rotating shaft, the circlip including an annular body, an opening being formed in the annular body, the annular body having a first end and a second end that correspond to the opening, a first snap hook being provided at the first end, and a second snap hook interlockable with the first snap hook being provided at the second end, so as to enable the first snap hook and the second snap hook to be interlocked with each other when the circlip is in an expanded state, where an avoidance area is also formed on an inner annular surface of the annular body where the first end is adjacent to the second end, so that during mounting, there is a gap between a portion of the inner annular surface corresponding to the avoidance area and tooling for mounting the circlip. The circlip provided in the invention can reduce the wear of the tooling during assembly, thereby prolonging the service life of the tooling.

## Description

### Technical Field

The invention relates to the technical field of vehicles, and particularly provides a vehicle and a circlip for a high-speed rotating shaft.

### Background Art

With the development of new energy vehicles, a motor drive system is developing to be miniaturized, the structure is increasingly compact and the gear ratio is gradually increasing, resulting in an increasingly high rotational speed of a motor shaft, which is a big challenge to a circlip for the motor shaft. The ordinary circlip is unable to withstand the high rotational speed, and may disengage due to the centrifugal force, which causes failure of parts.

To solve the problem of the circlip being prone to disengagement, at present, double-layer self-locking circlips are commonly used in the industry. However, such circlips have poor assemblability, require high assembly quality, and cannot be assembled automatically. In some cases, circlips are thickened to increase their rigidity and thus reduce the expansion under the centrifugal force. However, such circlips often require a strong assembly force and thus are difficult to assemble.

To solve the problem of the circlip being difficult to assemble, the patent document of Application No. 202310808669.2 provides an anti-disengagement elastic retaining ring capable of springing back and self-locking and a mounting method, where the elastic retaining ring is provided with interlockable structures, to implement the anti-disengagement function while reducing the difficulty of mounting. However, there is still a problem of the elastic retaining ring being likely to cause wear of tooling during assembly.

Accordingly, there is a need in the art for a new circlip to resolve the above problem.

### Summary

The invention is intended to solve the above technical problem, that is, at least solve the problem of an existing anti-disengagement circlip for a motor shaft being likely to cause wear of tooling.

In a first aspect, the invention provides a circlip for a high-speed rotating shaft, the circlip including an annular body, an opening being provided in the annular body, the annular body having a first end and a second end that correspond to the opening, a first snap hook being provided at the first end, and a second snap hook interlockable with the first snap hook being provided at the second end, so as to enable the first snap hook and the second snap hook to be interlocked with each other when the circlip is in an expanded state, where an avoidance area is also formed on an inner annular surface of the annular body where the first end is adjacent to the second end, so that during mounting, there is a gap between a portion of the inner annular surface corresponding to the avoidance area and tooling for mounting the circlip.

In some feasible implementations of the circlip for a high-speed rotating shaft as described above, a rounded corner is provided at a portion of each of the first end and the second end close to the inner annular surface of the circlip.

In some feasible implementations of the circlip for a high-speed rotating shaft as described above, the portion of the inner annular surface corresponding to the avoidance area is an arc surface.

In some feasible implementations of the circlip for a high-speed rotating shaft as described above, a portion of the first snap hook cooperating with the second snap hook is in an upright U-shape, and the second snap hook is in an inverted U-shape adaptable to the first snap hook.

It should be noted that the "upright U-shape" and the "inverted U-shape" herein refer to directions of an opening, where an opening facing upward corresponds to the upright U-shape, and an opening facing downward corresponds to the inverted U-shape, and it is not intended to limit two arms of a U-shaped structure as being vertical, nor to limit two arms of a U-shaped structure as having the same length.

It should be understood that the first snap hook and the second snap hook in the U-shapes each may have a random contour, such as a semicircular inclined U-shape, a flared U-shape, or a tapered U-shape, and should fall in the scope of protection of the invention as long as they have openings facing upward and downward and can achieve a self-locking function.

In some feasible implementations of the circlip for a high-speed rotating shaft as described above, a hook portion of the first snap hook has an inclined first surface, a hook portion of the second snap hook has a second surface adaptable to the first surface, so as to enable the first surface and the second surface to abut tightly against each other when the circlip is in the expanded state.

In some feasible implementations of the circlip for a high-speed rotating shaft as described above, the first snap hook includes a first cantilever extending in a tangential direction of the circlip and a first hook portion extending outwardly in a radial direction, the length of the first cantilever being greater than the length of the first hook portion; and/or
the second snap hook includes a second cantilever extending in the tangential direction of the circlip and a second hook portion extending inwardly in the radial direction, the length of the second cantilever being greater than the length of the second hook portion.

In some feasible implementations of the circlip for a high-speed rotating shaft as described above, the first snap hook includes a first cantilever extending in a tangential direction of the circlip and a first hook portion extending outwardly in a radial direction, the second snap hook includes a second cantilever extending in the tangential direction of the circlip and a second hook portion extending inwardly in the radial direction, and a gap is provided between the first cantilever and the second hook portion and between the second cantilever and the first hook portion in the radial direction.

In some feasible implementations of the circlip for a high-speed rotating shaft as described above, the center of the inner annular surface of the circlip is offset relative to the center of an outer annular surface thereof.

In some feasible implementations of the circlip for a high-speed rotating shaft as described above, the center of the inner annular surface of the circlip is located on a side of the center of the outer annular surface that is close to the opening.

In some feasible implementations of the circlip for a high-speed rotating shaft as described above, a first operating hole being provided in the first end, and a second operating hole being provided in the second end.

In some feasible implementations of the circlip for a high-speed rotating shaft as described above, the first operating hole and the second operating hole are at the same distance from the center of the inner annular surface.

The circlip provided in the invention is provided with the interlockable first and second snap hooks at the opening, so that when the circlip is subjected to a centrifugal force as rotating at a high speed along with the rotating shaft, the self-locking function can be achieved by means of the interlocking of the first snap hook and the second snap hook, thus solving the problem of disengagement from the rotating shaft due to the excessive expansion. Moreover, the avoidance area is constructed on the inner annular surface where the first end is adjacent to the second end, such that the avoidance area results in the gap between the portion of the inner annular surface corresponding to the avoidance area and a surface of the tooling during mounting of the circlip. As such, the wear of the tooling caused by the circlip can be reduced during the mounting, thereby prolonging the service life of the tooling.

Further, the rounded corner is provided at the portion of each of the first end and the second end close to the inner annular surface of the circlip, such that the rounded corners can avoid scraping with the rotating shaft and the tooling during assembly of the circlip, further protecting the tooling and reducing the wear of the tooling.

It should be understood that the portion of the inner annular surface corresponding to the avoidance area may be configured as any form of a surface that can reduce wear, such as an arc surface and a corrugated surface.

In a second aspect, the invention further provides a vehicle, including a circlip for a high-speed rotating shaft according to any one of the foregoing technical solutions.

It should be understood by those skilled in the art that since the vehicle is equipped with the circlip according to any one of the foregoing technical solutions, the vehicle has all the technical effects of the circlip as described above, which will not be repeated here.

### Brief Description of the Drawings

Preferred implementations of the invention are described below with reference to the accompanying drawings, in which:
FIG. 1 is a schematic structure diagram of a circlip according to the invention;
FIG. 2 is a schematic structure diagram of assembling a circlip with tooling according to the invention;
FIG. 3 is a schematic diagram of a state in which a first hook portion and a second hook portion are misaligned during spring-back of a circlip according to the invention; and
FIG. 4 is an enlarged structure diagram of part A in FIG. 3.

### List of reference signs:

1. Circlip; 11. First end; 111. First cantilever; 112. First hook portion; 1121. First surface; 113. First operating hole; 114. First rounded corner; 12. Second end; 121. Second cantilever; 122. Second hook portion; 1221. Second surface; 123. Second operating hole; 124. Second rounded corner; 13. Inner annular surface; 131. Avoidance area; 14. Outer annular surface; 2. Press sleeve; 21. Stepped structure; 3. Guide sleeve.

### Detailed Description of Embodiments

The preferred implementations of the invention are described below with reference to the accompanying drawings. It should be understood by those skilled in the art that these implementations are merely used to explain the technical principles of the invention and are not intended to limit the scope of protection of the invention. Those skilled in the art can make adjustments to the implementations according to requirements, so as to adapt to specific application scenarios. For example, the technical solutions of the invention are applicable to other types of vehicles, such as hybrid vehicles, although the embodiments below are illustrated using a battery electric vehicle as an example.

To better illustrate the invention, numerous specific details are given in the following detailed description. It should be understood by those skilled in the art that the invention may be practiced without some specific details.

In the description of the invention, the terms that indicate the direction or positional relationship, such as "upper", "lower", "inner", and "outer", are based on the direction or positional relationship in practical applications, which is merely for ease of description instead of indicating or implying that the apparatus to be protected must have a particular orientation and be constructed and operated in a particular orientation, and therefore should not be construed as limiting the invention. In addition, the terms such as "first" and "second" are merely used for descriptive purposes, and cannot be construed as indicating or implying relative importance.

In addition, it should also be noted that, in the description of the invention, the terms "mount" and "connect" should be interpreted in a broad sense unless explicitly defined and limited otherwise. For example, a connection may be a fixed connection, a detachable connection, or an integral connection; or may be a mechanical connection or an electrical connection; or may be a direct connection, or an indirect connection by means of an intermediate medium. For those skilled in the art, the specific meaning of the above-mentioned terms in the invention can be interpreted according to the specific situation.

The vehicle provided in the embodiments of the invention is a battery electric vehicle configured with a motor drive system, where the motor drive system includes assemblies such as a motor (electric motor), a motor controller, and a speed reducer. The motor is a power core of the whole vehicle, and is used for converting electric energy provided by a battery into kinetic energy and then drive the electric vehicle to run via the speed reducer and an axle. The motor controller is used for controlling the rotational speed and steering of the motor by sending corresponding control commands according to input signals of a brake pedal and an accelerator pedal, so as to drive the electric vehicle to run. The speed reducer is used for converting a high speed operation of the electric motor into a low speed operation by means of gear transmission and then outputting the low speed operation.

A motor shaft needs to operate at a high speed during the running of the electric vehicle. To ensure smooth rotation of the motor shaft, a bearing needs to be mounted on the motor shaft, and thus a circlip is required to limit an inner ring of the bearing. When the circlip is mounted to the rotating shaft and rotates at a high speed along with the rotating shaft, the circlip is likely to expand at an opening thereof due to the generated centrifugal force and thus disengages from the rotating shaft.

In view of above, the invention provides a circlip that can prevent disengagement and reduce wear of tooling during mounting.

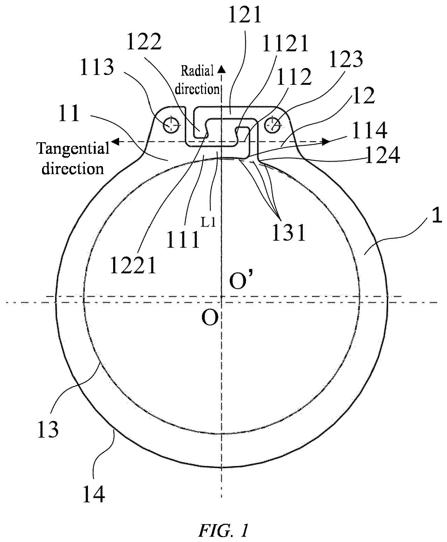

As shown in FIG. 1, the circlip 1 provided in the invention includes an annular body. An opening is formed in the annular body, and the annular body has a first end 11 and a second end 12 that correspond to the opening. A first snap hook is provided at the first end 11, and a second snap hook interlockable with the first snap hook is provided at the second end 12, so as to enable the first snap hook and the second snap hook to be interlocked with each other when the circlip 1 is in an expanded state. The expanded state is a state in which two end portions at the opening have a tendency to move away from each other due to the centrifugal force when the circlip 1 rotates at a high speed along with a rotating shaft.

In this embodiment, a portion of the first snap hook cooperating with the second snap hook is in an upright U-shape. Based on the orientation in FIG. 1, the upright U-shape refers to a U-shaped structure with an opening facing upward. The second snap hook is in an inverted U-shape adaptable to the first snap hook. Based on the orientation in FIG. 1, the inverted U-shape refers to a U-shaped structure with an opening facing downward. The first snap hook includes a first cantilever 111 extending in a tangential direction of the circlip 1 and a first hook portion 112 extending outwardly in a radial direction, the length of the first cantilever 111 being greater than the length of the first hook portion 112. The second snap hook includes a second cantilever 121 extending in the tangential direction of the circlip 1 and a second hook portion 122 extending inwardly in the radial direction, the length of the second cantilever 121 being greater than the length of the second hook portion 122. Such a configuration provides a space for expansion during mounting, so that the circlip 1 can be smoothly snapped into a circlip groove in the shaft. As shown in FIG. 1, the extending direction of the first cantilever 111 is opposite that of the second cantilever 121, and the extending direction of the first hook portion 112 is opposite that of the second hook portion 122. As such, when the circlip 1 expands due to the centrifugal force, the first cantilever 111 drives the first hook portion 112 to have a tendency to move in a direction opposite the extending direction of the first cantilever 111, and the second cantilever 121 drives the second hook portion 122 to have a tendency to move in a direction opposite the extending direction of the second cantilever 121, so that the first hook portion 112 and the second hook portion 122 gradually abut against each other and then limit their further movement, thus achieving self-locking of the circlip 1 and preventing disengagement at the opening.

In addition, to facilitate processing such as stamping, there is a gap between the first cantilever 111 and the second hook portion 122 and between the second cantilever 121 and the first hook portion 112.

To improve the locking ability of the first snap hook and the second snap hook, a hook portion of the first snap hook has an inclined first surface 1121, a hook portion of the second snap hook has a second surface 1221 adaptable to the first surface 1121, so as to enable the first surface 1121 and the second surface 1221 to abut tightly against each other when the circlip 1 is in the expanded state. As shown in FIG. 1, the first surface 1121 is inclined toward the upper left from a root of the first hook portion 112, and the second surface 1221 is inclined toward the lower right from a root of the second hook portion 122. When the circlip 1 is in the expanded state, the first hook portion 112 and the second hook portion 122 are subjected to main component forces of the expansion centrifugal force perpendicular to the first surface 1121 and the second surface 1221, generating a large friction force between the first surface 1121 and the second surface 1221, which can prevent the first hook portion 112 and the second hook portion 122 from disengaging from each other.

It should be understood that it is also possible to configure the first surface 1121 and the second surface 1221 as vertical surfaces, or configure the first surface 1121 to be inclined toward the upper right from the root of the first hook portion 112, and the second surface 1221 to be inclined toward the lower left from the root of the second hook portion 122, as long as it is ensured that the first surface 1121 and the second surface 1221 have relatively large roughness and that a friction force corresponding to an angle of the inclination is greater than a component force of the centrifugal force along the surface.

Further, to increase the resilience of the circlip 1, in this embodiment, the center of an inner annular surface 13 of the circlip 1 is offset relative to the center of an outer annular surface 14 thereof. As shown in FIG. 1, the center of the inner annular surface 13 of the circlip 1 is denoted as O', and the center of the outer annular surface 14 thereof is denoted as O. The center O' of the inner annular surface 13 of the circlip 1 is located on a side of the center O of the outer annular surface 14 that is close to the opening. Based on the orientation in FIG. 1, the center O' is located above the center O, which can increase both the strength and the resilience of the circlip 1.

Further, to facilitate detachment of the circlip 1 with pliers for the circlip 1 during reworking, a first operating hole 113 is provided in the first end 11 of the circlip 1, and a second operating hole 123 is provided in the second end 12, where the first operating hole 113 and the second operating hole 123 are symmetrical with respect to a central axis.

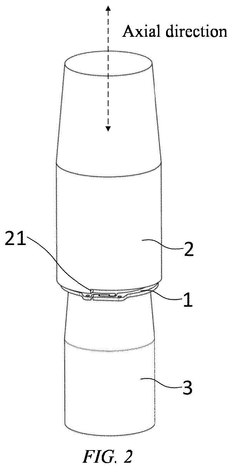

As shown in FIG. 2, the invention further provides tooling for the circlip 1. The tooling includes a press sleeve 2 and a guide sleeve 3, where the guide sleeve 3 is in the shape of a cone or a combination of a cone and a cylinder, and the press sleeve 2 is in the shape of a cone, a cylinder or a combination thereof. In this embodiment, the press sleeve 2 and the guide sleeve 3 are each in the structural form of a combination of a cone and a cylinder. A stepped structure 21 is provided at the bottom of the press sleeve 2, and can axially stagger and separate two sides of the opening of the circlip 1 during press-fitting of the circlip 1. As the circlip 1 is pressed down by the press sleeve 2 continuously, the circlip 1 expands under the action of the guide sleeve 3, and after the circlip 1 is pressed to the circlip groove, the circlip 1 disengages from the tooling, then automatically resets due to the resilience, and snaps into the circlip groove.

Since there is an axial relative movement between the circlip 1 and the guide sleeve 3 during press-fitting of the circlip 1 to the circlip groove, the existing circlip 1 is likely to form scratches on the guide sleeve 3 due to sharp corners at the snap hooks, resulting in wear of the guide sleeve 3. To reduce the wear of the guide sleeve 3 caused by the snap groove, in an embodiment of the invention, an avoidance area 131 is also formed on the inner annular surface 13 of the annular body where the first end 11 is adjacent to the second end 12, so that during mounting, there is a gap between a portion of the inner annular surface 13 corresponding to the avoidance area 131, and a surface of the tooling for mounting the circlip 1, and in particular a surface of the guide sleeve 3, so as to avoid scratching the tooling. As shown in FIG. 1, an arc dashed line represents the contour of the rotating shaft, which may also be understood as a schematic representation of a contour of an inner annular surface of a conventional circlip, where a radial dimension of the arc dashed line is consistent with a radial dimension of the inner annular surface of the circlip. Sharp structures of the first end 11 and the second end 12 may scratch the guide sleeve during mounting. Thus, part of the material of the circlip 1 in the invention is removed to enlarge the radial dimension of a portion of the inner annular surface of the conventional circlip corresponding to the arc dashed line, thereby forming the avoidance area 131. The avoidance area 131 results in gaps between the guide sleeve 3 and portions of the inner annular surface 13 corresponding to the first end 11 and the second end 12 during mounting, so that the wear can be reduced. In this embodiment, the portion of the inner annular surface 13 corresponding to the avoidance area 131 is a discontinuous arc surface, where part of the arc surface is formed at the first end 11, the other part of the arc surface is formed at the second end 12, and there is a gap between the first end 11 and the second end 12.

Further, in an embodiment of the invention, a rounded corner is provided at a portion of each of the first end 11 and the second end 12 close to the inner annular surface 13 of the circlip 1. As shown in FIG. 1, a first rounded corner 114 is provided at a position on the first hook portion 112 close to the inner annular surface 13, and a second rounded corner 124 is provided at a portion of the second end 12 adjacent to the first hook portion 112, which can effectively avoid scratches on the guide sleeve 3, thereby further reducing the wear of the guide sleeve 3.

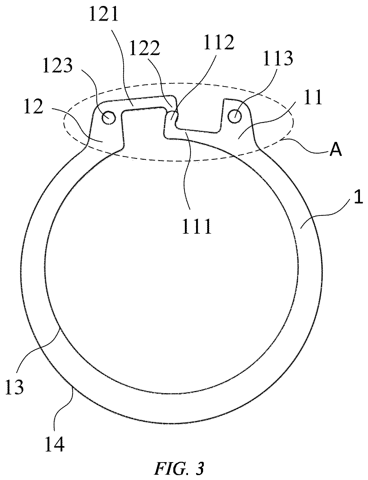

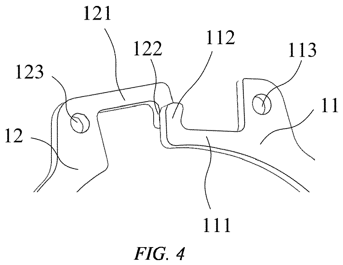

It should be noted that in the circlip 1 in the invention, the first cantilever 111 and the second cantilever 121 are configured such that the first hook portion 112 and the second hook portion 122 can be axially misaligned under the action of a resilience force, which is specifically achieved by controlling a ratio of a width in the radial direction to a length in the tangential direction of the first cantilever and the second cantilever. As such, a sufficient amount of misalignment between the first hook portion and the second hook portion in the radial direction can be ensured, thereby ensuring the reliability of the self-locking of the circlip. In particular, as shown in FIGS. 3 and 4, the length of the first cantilever in the tangential direction is significantly greater than the width thereof in the radial direction, where the tangential direction and the radial direction are as shown in FIG. 1. When the circlip disengages from the tooling and then is subjected to the resilience force, the first hook portion and the second hook portion interact with each other in the tangential direction, until they are misaligned in an axial direction, where the axial direction is as shown in FIG. 2. When the first hook portion and the second hook portion move toward each other until they move past each other, the circlip is converted into a final state as shown in FIG. 1. During this process, the first hook portion and the second hook portion are not misaligned in the radial direction, and therefore, there is no need to provide a guide structure on the first hook portion and the second hook portion. Compared with the prior art, radial dimensions of the first hook portion and the second hook portion are increased, which can improve the reliability of the self-locking of the circlip.

The circlip 1 provided in the invention presents an overall flat sheet structure in both a non-mounted state and a mounted state.

Heretofore, the technical solutions of the invention have been described in conjunction with the preferred implementations shown in the drawings, however, those skilled in the art can readily understand that the scope of protection of the invention is obviously not limited to these specific implementations. Those skilled in the art could make equivalent changes or substitutions to the related technical features without departing from the principles of the invention, and all the technical solutions after the changes or the substitutions fall within the scope of protection of the invention.

## Claims

1. A circlip for a high-speed rotating shaft, comprising an annular body, an opening being provided in the annular body, the annular body having a first end and a second end that correspond to the opening, a first snap hook being provided at the first end, and a second snap hook interlockable with the first snap hook being provided at the second end, so as to enable the first snap hook and the second snap hook to be interlocked with each other when the circlip is in an expanded state,
wherein an avoidance area is also formed on an inner annular surface of the annular body where the first end is adjacent to the second end, so that during mounting, there is a gap between a portion of the inner annular surface corresponding to the avoidance area and tooling for mounting the circlip.

2. The circlip for a high-speed rotating shaft according to claim 1, wherein a rounded corner is provided at a portion of each of the first end and the second end close to the inner annular surface of the circlip.

3. The circlip for a high-speed rotating shaft according to claim 1 or 2, wherein the portion of the inner annular surface corresponding to the avoidance area is an arc surface.

4. The circlip for a high-speed rotating shaft according to any one of claims 1 to 3, wherein a portion of the first snap hook cooperating with the second snap hook is in an upright U-shape, and the second snap hook is in an inverted U-shape adaptable to the first snap hook.

5. The circlip for a high-speed rotating shaft according to claim 4, wherein a hook portion of the first snap hook has an inclined first surface, a hook portion of the second snap hook has a second surface adaptable to the first surface, so as to enable the first surface and the second surface to abut tightly against each other when the circlip is in the expanded state.

6. The circlip for a high-speed rotating shaft according to claim 4 or 5, wherein the first snap hook comprises a first cantilever extending in a tangential direction of the circlip and a first hook portion extending outwardly in a radial direction, the length of the first cantilever being greater than the length of the first hook portion; and/or
the second snap hook comprises a second cantilever extending in the tangential direction of the circlip and a second hook portion extending inwardly in the radial direction, the length of the second cantilever being greater than the length of the second hook portion.

7. The circlip for a high-speed rotating shaft according to any one of claims 4 to 6, wherein the first snap hook comprises a first cantilever extending in a tangential direction of the circlip and a first hook portion extending outwardly in a radial direction, the second snap hook comprises a second cantilever extending in the tangential direction of the circlip and a second hook portion extending inwardly in the radial direction, and a gap is provided between the first cantilever and the second hook portion and between the second cantilever and the first hook portion in the radial direction.

8. The circlip for a high-speed rotating shaft according to any one of claims 1 to 7, wherein the center of the inner annular surface of the circlip is offset relative to the center of an outer annular surface thereof.

9. The circlip for a high-speed rotating shaft according to claim 8, wherein the center of the inner annular surface of the circlip is located on a side of the center of the outer annular surface that is close to the opening.

10. The circlip for a high-speed rotating shaft according to any one of claims 1 to 9, wherein a first operating hole is provided in the first end, and a second operating hole is provided in the second end.

11. A vehicle, comprising a circlip for a high-speed rotating shaft according to any one of claims 1 to 10.
